(19) Europäisches Patentamt / European Patent Office / Office européen des brevets

(11) **EP 3 020 504 A1**

(12) **EUROPEAN PATENT APPLICATION**
published in accordance with Art. 153(4) EPC

(43) Date of publication:
**18.05.2016 Bulletin 2016/20**

(21) Application number: **14822110.4**

(22) Date of filing: **26.05.2014**

(51) Int Cl.:
*B23K 35/368* (2006.01)   *B23K 35/30* (2006.01)
*C22C 19/05* (2006.01)

(86) International application number:
**PCT/JP2014/063846**

(87) International publication number:
**WO 2015/005002 (15.01.2015 Gazette 2015/02)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **12.07.2013   JP 2013146227**

(71) Applicant: **Kabushiki Kaisha Kobe Seiko Sho (Kobe Steel, Ltd.)**
**Kobe-shi, Hyogo 651-8585 (JP)**

(72) Inventors:
• **MIYATA, Minoru**
  **Kanagawa 251-8551 (JP)**
• **SUZUKI, Reiichi**
  **Kanagawa 251-8551 (JP)**

(74) Representative: **Müller-Boré & Partner**
**Patentanwälte PartG mbB**
**Friedenheimer Brücke 21**
**80639 München (DE)**

(54) **FLUX-CORED WIRE FOR BUILD-UP WELDING**

(57)     Provided is a flux-cored wire that is for build-up welding, can obtain a target welding metal composition by means of a low number of layers, and has a low base material dilution. The flux-cored wire for build-up welding, which is such that flux fills the inside of an outer skin, has a composition satisfying the belowmentioned formula (I) when, with respect to the total mass of the flux, the total content (F equivalent value) of alkali metal fluorides and alkaline earth metal fluorides is A (mass%), the total content of alkali metal elemental metals and alkaline earth metal elemental metals is B (mass%), and the total content of alkali metal oxides and alkaline earth metal oxides is C (mass%):

$$0.3 \le [A/\{1 + 0.7 \times (B + 2C)\}] \le 2.0 \,...(I).$$

**Description**

Technical Field

The present invention relates to a flux-cored wire used for build-up welding. More particularly, the invention relates to a technique for improving weldability in build-up welding using a flux-cored wire.

Background Art

Build-up welding is a welding method in which base metals are not joined together, but a metal appropriate for the purpose is deposited on the surface of a base metal. In the case where a build-up welding process is performed by gas-shielded arc welding, a flux-cored wire is mainly used (for example, refer to Patent Literature 1). For example, in the metal-based flux-cored wire described in Patent Literature 1, by adding appropriate amounts of alkali metal compounds, alkaline-earth metal compounds, and alkaline-earth metal alloys, the arc is stabilized, and the amount of spatter generated is reduced.

On the other hand, in build-up welding, it is preferable to avoid melting of the base metal as much as possible during welding from the viewpoint that dilution of the base metal component has a major effect on the weld metal. Accordingly, a flux-cored welding wire has been proposed in which, by using pure Ar as a shielding gas and specifying the wire component, the dilution ratio of the base metal component is decreased while maintaining good weldability (refer to Patent Literature 2).

Citation List

Patent Literature

PTL 1: Japanese Unexamined Patent Application Publication No. 2010-253516
PTL 2: Japanese Unexamined Patent Application Publication No. 2012-55899

Summary of Invention

Technical Problem

However, in the case where build-up welding is performed using the existing flux-cored wire, because of increased penetration and the high dilution ratio of the base metal, it is necessary to form three or more build-up layers in order to obtain a predetermined weld metal composition. For example, in the flux-cored wire described in Patent Literature 1, dilution of the base metal is not taken into consideration. Therefore, when the alkali metal compounds and the alkaline-earth metal compounds are added in the form of oxides which are electron emission materials, the concentration of the arc increases, causing an increase in the penetration depth and an increase in the dilution ratio of the base metal.

Furthermore, in the technique described in Patent Literature 2, pure Ar is used as the shielding gas, and oxides are not formed immediately below the arc. Consequently, the current density in the arc atmosphere is largely influenced by the components in the welding wire. For example, in the case where large amounts of electron emission materials are added into the welding wire, penetration increases, and it may not possible to obtain a low dilution weld metal.

Accordingly, it is a main object of the present invention to provide a flux-cored wire for build-up welding in which the dilution ratio of the base metal is low, and it is possible to obtain the intended weld metal composition with a small number of layers.

Solution to Problem

A flux-cored wire for build-up welding according to the present invention includes a sheath filled with a flux, in which the filling ratio of the flux is 10.0% to 35.0% by mass, and the formula 1 below is satisfied, where A (mass%) represents the total content (F equivalent) of alkali metal fluorides and alkaline-earth metal fluorides, B (mass%) represents the total content of elemental alkali metals and elemental alkaline-earth metals, and C (mass%) represents the total content of alkali metal oxides and alkaline-earth metal oxides, relative to the total mass of the flux.
[Formula 1]

$$0.3 \le [A/\{1 + 0.7 \times (B + 2C)\}] \le 2.0 \quad \cdots \quad (1)$$

In the flux, the total content A, in terms of F equivalent, of alkali metal fluorides and alkaline-earth metal fluorides can be 0.2% to 3.0% by mass. Furthermore, the flux can have a composition in which the relationship between the total content B (mass%) of elemental alkali metals and elemental alkaline-earth metals and the total content C (mass%) of alkali metal oxides and alkaline-earth metal oxides satisfies the formula 2 below.
[Formula 2]

$$(B + 2C) \le 6 \quad \cdots \quad (2)$$

Furthermore, in the flux, the total content of $TiO_2$, $SiO_2$, and $ZrO_2$ may be limited to 3% by mass or less.
On the other hand, in the flux-cored wire of the present invention, the sheath can be made of austenitic stainless steel, and the flux-cored wire can be used for arc welding that uses a shielding gas having an Ar gas concentration of 95% by volume or more.
In such a case, for example, the wire can have a composition including 0.3% to 1% by mass of Si, 0.5% to 2.5% by mass of Mn, 18% to 25% by mass of Cr, 9% to 14% by mass of Ni, 0.04% by mass or less of C, and the balance being Fe and incidental impurities, relative to the total mass of the wire.
Furthermore, as necessary, 4% by mass or less of Mo and/or 1% by mass or less of Nb may be added, relative to the total mass of the wire.
In the flux-cored wire of the present invention, the sheath can be made of a Ni-based alloy, and the flux-cored wire can be used for arc welding that uses a shielding gas having an Ar gas concentration of 95% by volume or more.
In such a case, the wire can have a composition including 0.1% to 1% by mass of Si, 0.3% to 10% by mass of Mn, 13% to 24% by mass of Cr, and the balance being Ni and incidental impurities, relative to the total mass of the wire.
Furthermore, as necessary, at least one element selected from the group consisting of 0.1% by mass of less of C, 17% by mass or less of Mo, 5% by mass or less of Nb, 0.75% by mass or less of Ti, 5% by mass or less of W, 0.3% by mass or less of V, and 20% by mass or less of Fe, relative to the total mass of the wire, may be added.
The flux-cored wire of the present invention can be used for hardfacing welding that uses a shielding gas having an Ar gas concentration of 95% by volume or more.
In such a case, the wire can have a composition including 0.05% to 1.5% by mass of C, 0.3% to 3.0% by mass of Si, 0.3% to 3.0% by mass of Mn, 0.3% to 10% by mass of Cr, and the balance being Fe and incidental impurities, relative to the total mass of the wire.
Furthermore, at least one element selected from the group consisting of 9% by mass or less of Mo, 4% by mass or less of W, and 2% by mass or less of V, relative to the total mass of the wire, may be added.

Advantageous Effects of Invention

According to the present invention, since the balance of forms of alkali metals and alkaline-earth metals added is specified, dilution of the base metal can be suppressed, and it is possible to obtain the intended weld metal composition with a small number of layers.

Brief Description of Drawings

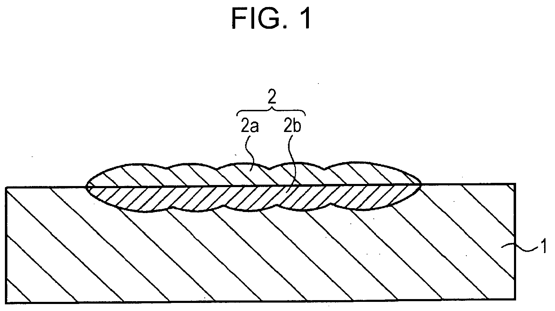

[Fig. 1] Fig. 1 is a cross-sectional view illustrating a method for measuring a base metal dilution ratio.

Description of Embodiments

Embodiments will be described in detail below. However, it is to be understood that the present invention is not limited to the embodiments described below.
A flux-cored wire according to an embodiment is used for build-up welding and has a structure in which a sheath is filled with a flux having a composition satisfying the formula 3 below at a filling ratio of 10.0% to 35.0% by mass relative to the total mass of the wire. In the formula 3, A represents the total content (mass%), in terms of F equivalent, of alkali metal fluorides and alkaline-earth metal fluorides, B represents the total content (mass%) of elemental alkali metals and elemental alkaline-earth metals, and C represents the total content of alkali metal oxides and alkaline-earth metal oxides. Note that A, B, and C stipulated in the formula 3 below are the values relative to the total mass of the flux.
[Formula 3]

$$0.3 \le [A/\{1 + 0.7 \times (B + 2C)\}] \le 2.0 \quad \cdots \quad (3)$$

The alkali metals and alkaline-earth metals, such as Na, K, Ca, and Mg, serve as arc stabilizers and are added, in order to reduce spatter, to a welding wire used for welding that uses $CO_2$ or a gas mixture as a shielding gas. However, the experiments and studies conducted by the present inventors have shown that, in an atmosphere having a high Ar concentration, forms of the alkali metals and alkaline-earth metals added to the welding wire have a major effect on arc behavior and penetration shape.

For example, when alkali metals and alkaline-earth metals are added as fluorides to the flux, effects are obtained such that arc spreading increases and penetration decreases. Specifically, metal fluorides decompose into metal ions and fluoride ions in the high-temperature arc atmosphere, and the metal ions produced by the dissociation reaction reduce the electrical resistance of the arc atmosphere, thereby spreading the arc and decreasing the penetration depth.

On the other hand, when alkali metals and alkaline-earth metals are added in the form of alloy components or oxides, which serve as electron emission materials, the arc becomes concentrated on the molten pool, resulting in excessive penetration. Specifically, alkali metal oxides and alkaline-earth metal oxides have a low work function and promote electron emission, thus having a function of increasing the concentration of the arc. Furthermore, elemental alkali metals and elemental alkaline-earth metals react with oxygen in the molten metal to produce alkali metal oxides and alkaline-earth metal oxides, and therefore have the same function as that described above.

Consequently, when alkali metal oxides, alkaline-earth metal oxides, elemental alkali metals, and elemental alkaline-earth metals are added in small amounts, it is possible to obtain the effect of reducing incomplete fusion by improving bead wettability. However, when added in excessive amounts, penetration increases and base metal dilution increases. Furthermore, alkali metals and alkaline-earth metals, which are strong deoxidizing agents, increase the viscosity of the molten pool and have the effect of suppressing dripping of the molten metal. However, addition in excessive amounts will lead to an increase in the amount of slag generated.

Accordingly, in the flux-cored wire according to the embodiment, the forms of alkali metals and alkaline-earth metals added are classified into fluorides, elemental metals, and oxides, and the relationship between the contents of these components in the flux is specified. Specifically, the flux composition is set so as to satisfy the formula 3 described above. Note that, when $[A/\{1 + 0.7 \times (B + 2C)\}]$ stipulated in the formula 3 described above is less than 0.3, the arc concentration effect due to alkali metal oxides and alkaline-earth metal oxides produced in the molten pool is larger than the arc spreading effect due to alkali metal fluorides and alkaline-earth metal fluorides. As a result, penetration increases, and base metal dilution increases.

On the other hand, when $[A/\{1 + 0.7 \times (B + 2C)\}]$ stipulated in the formula 3 described above exceeds 2.0, the arc spreading effect due to alkali metal fluorides and alkaline-earth metal fluorides becomes excessive relative to the arc concentration effect due to alkali metal and alkaline-earth metal oxides produced on the surface of the molten metal, and it is not possible to sufficiently melt the base metal. As a result, convex beads with poor wettability are produced, which is likely to lead to incomplete fusion. Furthermore, as fluorides are decomposed and ionized in the arc, the volume rapidly increases, resulting in generation of a large amount of spatter.

In addition, in the flux-cored wire according to the embodiment, the flux filling ratio is set in the range of 10.0% to 35.0% by mass relative to the total mass of the wire. When the flux filling ratio is less than 10.0% by mass relative to the total mass of the wire, it is not possible to perform stable droplet transfer by means of the flux, which is a characteristic of the flux-cored wire, the arc becomes unstable, and good welding cannot be achieved. Furthermore, when the flux filling ratio is more than 35.0% by mass relative to the total mass of the wire, molten flux is unlikely to be sufficiently stirred in the molten pool, and it is unlikely to obtain a weld metal having a uniform composition.

In the flux used for the flux-cored wire according to the embodiment, preferably, the total content of $TiO_2$, $SiO_2$, and $ZrO_2$ is limited to 3% by mass or less. In general, oxides, such as $TiO_2$, $SiO_2$, and $ZrO_2$, are added to the flux for the purpose of improving arc stability and protecting the weld metal from oxidation.

Furthermore, in some cases, alloy elements in the wire may be unavoidably oxidized during production or storage to produce metal oxides. However, in MIG welding that uses a shielding gas having a concentration of Ar, which is a non-oxidizing gas, of 95% by volume or more, oxidation of the weld metal is suppressed, and a sufficiently sound weld metal can be obtained. Therefore, it is not necessary to add $TiO_2$, $SiO_2$, and $ZrO_2$ in order to prevent oxidation of the surface of the bead.

On the other hand, in build-up welding, oxides, such as $TiO_2$, $SiO_2$, and $ZrO_2$, are likely to cause dripping of weld bead due to a decrease in the viscosity of the molten pool, slag removal time during automatic welding, and defects, such as slag inclusion. Therefore, it is preferable to decrease the amounts thereof added. Specifically, the content of $TiO_2$, $SiO_2$, and $ZrO_2$, is preferably set at 3% by mass or less relative to the total mass of the flux. Thereby, it is possible to considerably decrease the amount of slag generated.

Furthermore, in the flux-cored wire according to the embodiment, the total content A, in terms of F equivalent, of alkali metal fluorides and alkaline-earth metal fluorides is preferably set at 0.2% to 3.0% by mass. Thereby, it is possible to obtain a good bead shape while suppressing dilution of the base metal, and defect-free welding can be carried out. Furthermore, by limiting the total content A to 3.0% by mass or less, it is also possible to suppress the amount of spatter generated.

Furthermore, in the flux-cored wire according to the embodiment, preferably, the relationship between the total content B (mass%) of elemental alkali metals and elemental alkaline-earth metals and the total content C (mass%) of alkali metal oxides and alkaline-earth metal oxides satisfies the formula 4 below. Thereby, it is possible to form beads having good wettability while avoiding excessive penetration.

[Formula 4]

$$(B + 2C) \leq 6 \quad \cdots \quad (4)$$

By setting A at 0.2% to 3.0% by mass and by setting B and C in the range that satisfies the formula 4 above, the deoxidizing action due to addition of alkali metals and alkaline-earth metals contributes to an increase in the viscosity of the molten metal and bead dripping can be effectively suppressed.

In the flux-cored wire according to the embodiment, the components of the flux other than the components described above are not particularly limited, and examples thereof include C, Si, Mn, Cr, Ni, and Mo. These components do not influence the effects described above.

The composition of the sheath of the flux-cored wire according to the embodiment is not particularly limited, but can be appropriately selected. For example, in the case of MIG welding that uses a shielding gas having an Ar concentration of 95% by volume or more, the sheath can be made of various steel materials, Ni-based alloys, and the like. In particular, the flux-cored wire according to the embodiment is suitable for build-up welding that uses austenitic stainless steel or a Ni-based alloy which is capable of imparting high corrosion resistance to the surface of a structure, and hardfacing welding which imparts high abrasion resistance to the surface of a structure.

Austenitic stainless steel is a steel material in which Cr and Ni are added in order to obtain high corrosion resistance, and as a welding material, SUS308 including 18%Cr and 9%Ni, or the like is used. Note that the sheath of the flux-cored wire according to the embodiment is not limited to SUS308, and various types of austenitic stainless steel, such as SUS316 including Mo and SUS347 including Nb can be used.

In the case where austenitic stainless steel is used for the sheath, for example, the wire can have a composition including 0.3% to 1% by mass of Si, 0.5% to 2.5% by mass of Mn, 18% to 25% by mass of Cr, 9% to 14% by mass of Ni, 0.04% by mass or less of C, as necessary, 4% by mass or less of Mo and/or 1% by mass or less of Nb, and the balance being Fe and incidental impurities, relative to the total mass of the wire. By setting the wire composition in this range, when corrosion-resistant build-up welding is carried out, it is possible to obtain a weld metal having good corrosion resistance.

Furthermore, a Ni-based alloy is an alloy that is designed to have a Ni content of 50% by mass or more in order to achieve a higher corrosion resistance than stainless steel. Examples thereof also include Inconel and Hastelloy in which Cr and Mo are added. In the flux-cored wire according to the embodiment, various Ni-based alloys can be used, and the same effects can be obtained by using any of them.

In the case where a Ni-based alloy is used for the sheath, for example, the wire can have a composition including 0.1% to 1% by mass of Si, 0.3% to 10% by mass of Mn, 13% to 24% by mass of Cr, as necessary, one or two or more elements selected from the group consisting of 0.1% by mass of less of C, 17% by mass or less of Mo, 5% by mass or less of Nb, 0.75% by mass or less of Ti, 5% by mass or less of W, 0.3% by mass or less of V, and 20% by mass or less of Fe, and the balance being Ni and incidental impurities, relative to the total mass of the wire. By setting the wire composition in this range, it is possible to obtain a weld metal having excellent high-temperature performance and corrosion resistance.

On the other hand, hardfacing welding is a welding method for imparting abrasion resistance and high hardness to the surface of a structure. In order to increase the hardness of the weld metal, a welding material whose hardenability is enhanced by adding C, Cr, Mo, W, and the like to an ordinary carbon steel welding material is used.

For example, in the case where the flux-cored wire according to the embodiment is used for hardfacing welding, the wire can have a composition including 0.05% to 1.5% by mass of C, 0.3% to 3.0% by mass of Si, 0.3% to 3.0% by mass of Mn, 0.3% to 10% by mass of Cr, as necessary, one or two or more elements selected from the group consisting of 9% by mass or less of Mo, 4% by mass or less of W, and 2% by mass or less of V, and the balance being Fe and incidental impurities, relative to the total mass of the wire. By setting the wire composition in this range, it is possible to obtain appropriate hardness during hardfacing welding.

The conditions for performing build-up welding using the flux-cored wire according to the embodiment are not particularly limited. For example, the welding current can be set at 200 to 300 A, and the welding speed can be set at 20 to 50 cm/min.

Furthermore, the shielding gas is not particularly limited, but it is preferable to use a gas having an Ar concentration of 95% by volume or more. $CO_2$ and $O_2$ contained in the shielding gas accelerate oxidation of the molten metal and promote formation of metal oxides. The metal oxides formed on the surface of the molten pool, which are electron emission materials, serve as sources for emitting electrons to the arc atmosphere, and have a function of increasing the concentration of the arc. Therefore, when the shielding gas contains $CO_2$ and $O_2$, the penetration depth increases, and base metal dilution increases. Furthermore, $CO_2$ and $O_2$ react with fluorides and carbonates in the flux and produce a large amount of spatter, which is also a problem.

In contrast, when the Ar concentration of the shielding gas is set at 95% by volume or more, formation of metal oxides is suppressed, and the amount of spatter can be decreased. Consequently, dilution of the base metal is suppressed, and weldability can be improved.

As described above in detail, in the flux-cored wire according to the embodiment, since the relationship between the amounts of fluorides, elemental metals, and oxides of alkali metals and alkaline-earth metals added is specified, dilution of the base metal and the amount of slag generated can be decreased. Consequently, by using the flux-cored wire according to the embodiment, it is possible to obtain the intended weld metal composition with a small number of layers.

Furthermore, in the flux-cored wire according to the embodiment, the amount of dripping is small, and it is possible to obtain good bead appearance having a uniform toe. Dripping of the weld metal causes increases in the welding time, the amount of the welding material, and the forming time after welding for obtaining a required shape. Therefore, by using the flux-cored wire according to the embodiment, working efficiency can be improved.

EXAMPLES

The advantageous effects of the present invention will be specifically described below on the basis of examples of the present invention and comparative examples. In the examples, sheaths A to C shown in Table 1 were used, Nos. 1 to 5 shown in Table 2 were used as basic structures, and flux-cored wires Nos. 1 to 74 were fabricated by replacing part of Fe with the components shown in Tables 3 to 5. Among these flux-cored wires, Nos. 1 to 44 correspond to examples, and Nos. 45 to 74 correspond to comparative examples. Build-up welding was performed using the flux-cored wires of examples and comparative examples, and evaluation was made on the dilution ratio of the base metal, slag inclusion, incomplete welding, and the amount of spatter. Note that, in the sheath composition shown in Table 1 below and the content of alloy elements in the flux shown in Table 2, the balance includes incidental impurities.

[Table 1]

| Sheath type | | Composition (mass%) | | | | | | | | | |
|---|---|---|---|---|---|---|---|---|---|---|---|
| | | C | Si | Mn | P | S | Cr | Ni | Mo | Nb | Fe |
| A | Mild steel | 0.016 | 0.01 | 0.19 | 0.005 | 0.005 | - | - | - | - | Balance |
| B | SUS304 | 0.01 | 0.28 | 1.25 | 0.05 | 0.05 | 19.2 | 9.9 | - | - | Balance |
| C | Ni-based alloy | 0.01 | - | - | - | - | 22 | Balance | 13 | - | 4 |

[Table 2]

| No. | Sheath | Content of alloy elements in flux (mass%) | | | | | | | | | Flux filling ratio (mass%) |
|---|---|---|---|---|---|---|---|---|---|---|---|
| | | C | Si | Mn | Cr | Ni | Mo | Ti | W | Fe | |
| 1 | A | 1 | 5 | 11 | 11 | - | 4 | 3 | - | Balance | 12.5 |
| 2 | B | 3 | 4.5 | 7.5 | 30 | - | 4 | - | - | Balance | 14.5 |
| 3 | B | 0.02 | 1 | 5 | 23 | 10 | - | - | - | Balance | 20.0 |
| 4 | C | 0.02 | 0.5 | 5 | 18 | 21 | 10 | - | - | Balance | 20.0 |
| 5 | C | 0.03 | 0.3 | - | 25 | Balance | 20 | - | 5 | 10 | 30.0 |

[Table 3]

| | No. | Wire structure | Content of alkali metals and alkaline-earth metals in flux (mass%) | | | | | | | | | | Other oxides (mass%) | | | |
|---|---|---|---|---|---|---|---|---|---|---|---|---|---|---|---|---|
| | | | Fluorides | | | | Elemental metals and oxides | | | | | | $TiO_2$ | $SiO_2$ | $ZrO_2$ | Total |
| | | | $K_2SiF_6$ | NaF | $CaF_2$ | A (F equivalent) | Mg | Ca | MgO | CaO | B+2C | A/(1+0.7*(B+2C)) | | | | |
| Example | 1 | 1 | 1 | | | 0.52 | | | | | 0 | 0.5 | | | | 0 |
| | 2 | 2 | | 1 | | 0.45 | | | | | 0 | 0.5 | | | | 0 |
| | 3 | 3 | | | 4 | 1.92 | | | | | 0 | 1.9 | | | | 0 |
| | 4 | 4 | | 1 | 2 | 1.41 | | | | | 0 | 1.4 | | | | 0 |
| | 5 | 5 | 1.5 | 2 | | 1.68 | | | | | 0 | 1.7 | | | | 0 |
| | 6 | 2 | 2 | | 2 | 2 | | | | | 0 | 2.0 | | | | 0 |
| | 7 | 1 | 0.5 | 1 | 1 | 1.19 | | | | | 0 | 1.2 | | | | 0 |
| | 8 | 4 | 2 | | | 1.04 | | | | | 0 | 1.0 | | | | 0 |
| | 9 | 2 | | 0.5 | 0.5 | 0.465 | | | | | 0 | 0.5 | | | | 0 |
| | 10 | 3 | 2 | | 2 | 2 | | | | | 0 | 2.0 | | | | 0 |
| | 11 | 5 | 1 | 1 | 1 | 1.45 | | | | | 0 | 1.5 | | | | 0 |
| | 12 | 1 | 2 | | | 1.04 | | | | | 0 | 1.0 | | | | 0 |
| | 13 | 2 | 3 | | | 1.56 | 1 | | | | 1 | 0.9 | | | | 0 |
| | 14 | 3 | | 4 | | 1.8 | | 1 | | | 1 | 1.1 | | | | 0 |
| | 15 | 4 | | | 1 | 0.48 | | | 0.5 | | 1 | 0.3 | | | | 0 |
| | 16 | 2 | 1 | 1 | 1 | 1.45 | | | | 1 | 2 | 0.6 | | | | 0 |
| | 17 | 1 | 2 | 1 | | 1.49 | 5 | | | 1 | 7 | 0.3 | | | | 0 |
| | 18 | 5 | | 1 | 2 | 1.41 | | 3 | 1 | | 5 | 0.3 | | | | 0 |
| | 19 | 2 | 2 | | 2 | 2 | 4 | 3 | | 1 | 9 | 0.3 | | | | 0 |
| | 20 | 1 | 3 | | | 1.56 | 2 | | 1 | | 4 | 0.4 | | | | 0 |
| | 21 | 3 | | 4 | 1 | 2.28 | 1 | | 1 | | 3 | 0.7 | | | | 0 |
| | 22 | 2 | 2 | | 1 | 1.52 | | 2 | | | 2 | 0.6 | | | | 0 |
| | 23 | 4 | 3 | | 1 | 2.04 | 2 | | 1.5 | | 5 | 0.5 | | | | 0 |

(continued)

| | No. | Wire structure | Content of alkali metals and alkaline-earth metals in flux (mass%) | | | | | | | | | | Other oxides (mass%) | | | |
| --- | --- | --- | --- | --- | --- | --- | --- | --- | --- | --- | --- | --- | --- | --- | --- | --- |
| | | | Fluorides | | | | Elemental metals and oxides | | | | | | $TiO_2$ | $SiO_2$ | $ZrO_2$ | Total |
| | | | $K_2SiF_6$ | NaF | $CaF_2$ | A (F equivalent) | Mg | Ca | MgO | CaO | B+2C | A/(1+0.7*(B+2C)) | | | | |
| | 24 | 2 | | 5 | | 2.25 | 0.5 | 3 | 0.5 | 1 | 6.5 | 0.4 | | | | 0 |
| | 25 | 1 | 1 | 1 | 1 | 1.45 | 2 | 1 | | 1 | 5 | 0.3 | | | | 0 |

[Table 4]

| | No. | Wire structure | Content of alkali metals and alkaline-earth metals in flux (mass%) | | | | | | | | | | Other oxides (mass%) | | | |
|---|---|---|---|---|---|---|---|---|---|---|---|---|---|---|---|---|
| | | | Fluorides | | | | Elemental metals and oxides | | | | | | $TiO_2$ | $SiO_2$ | $ZrO_2$ | Total |
| | | | $K_2SiF_6$ | NaF | $CaF_2$ | A (F equivalent) | Mg | Ca | MgO | CaO | B+2C | A/(1+0.7*(B+2C)) | | | | |
| Example | 26 | 4 | 2 | | | 1.04 | 3 | | | | 3 | 0.3 | 2 | | | 2 |
| | 27 | 1 | | 2 | | 0.9 | | 1 | 1 | | 3 | 0.3 | | 3 | 3 3 | 3 |
| | 28 | 2 | | 1 | 2 | 1.41 | 1 | 1 | | 2 | 6 | 0.3 | | | 1 | 1 |
| | 29 | 5 | 1 | 2 | 1 | 1.9 | | | 2 | | 4 | 0.5 | 1 | 1 | | 2 |
| | 30 | 3 | 2 | 1 | | 1.49 | | 2 | 2 | | 6 | 0.3 | 1 | 1 | 1 | 3 |
| | 31 | 2 | | 2 | 1 | 1.38 | | 3 | | 1 | 5 | 0.3 | 1 | 0.5 | 0.5 | 2 |
| | 32 | 3 | 2 | 2 | 1 | 2.42 | 2 | | | 2 | 6 | 0.5 | 2 | | 1 | 3 |
| | 33 | 1 | 1 | 1 | | 0.97 | 2 | | | 1 | 4 | 0.3 | | 2 | 1 | 3 |
| | 34 | 5 | 3 | | | 1.56 | | | | | 0 | 1.6 | 1 | | | 1 |
| | 35 | 1 | | 3 | | 1.35 | | | | | 0 | 1.4 | | 2 | | 2 |
| | 36 | 2 | | | 3 | 1.44 | | | | | 0 | 1.4 | | | 0.5 | 0.5 |
| | 37 | 3 | 1 | 1 | | 0.97 | | | | | 0 | 1.0 | 1 | | 1 | 2 |
| | 38 | 5 | | 1 | 0.5 | 0.69 | | | | | 0 | 0.7 | | | 2 | 2 |
| | 39 | 3 | 2 | | 1 | 1.52 | | | | | 0 | 1.5 | 1 | 0.5 | | 1.5 |
| | 40 | 2 | 1 | 1 | 2 | 1.93 | | | | | 0 | 1.9 | | 2 | 0.5 | 2.5 |
| | 41 | 3 | | 4 | | 1.8 | | | | | 0 | 1.8 | 2 | | 1 | 3 |
| | 42 | 1 | 3 | 1 | | 2.01 | | | | | 0 | 2.0 | | 2 | 1 | 3 |
| | 43 | 4 | 1 | | | 0.52 | | | | | 0 | 0.5 | 0.5 | 1.5 | 1 | 3 |
| | 44 | 2 | 3 | | | 1.56 | | | | | 0 | 1.6 | 0.5 | 0.5 | 0.5 | 1.5 |

[Table 5]

| | No. | Wire structure | Content of alkali metals and alkaline-earth metals in flux (mass%) | | | | | | | | | | Other oxides (mass%) | | | |
| | | | Fluorides | | | | Elemental metals and oxides | | | | | | TiO$_2$ | SiO$_2$ | ZrO$_2$ | Total |
| | | | K$_2$SiF$_6$ | NaF | CaF$_2$ | A (F equivalent) | Mg | Ca | MgO | CaO | B+2C | A/(1+0.7*(B+2C)) | | | | |
| Comparative Example | 45 | 1 | 2 | 2 | 1 | 2.42 | | | | | 0 | 2.4 | 0.5 | | | 0.5 |
| | 46 | 3 | 1 | 2 | 1.5 | 2.14 | | | | | 0 | 2.1 | | 0.2 | 0.2 | 0.4 |
| | 47 | 1 | 1 | 3 | 1 | 2.35 | | | | | 0 | 2.4 | 0.3 | | | 0.3 |
| | 48 | 4 | 1 | | | 0.52 | | | 1 | | 2 | 0.2 | 0.4 | 0.5 | | 0.9 |
| | 49 | 1 | 1 | 0.5 | | 0.745 | | 1 | | 2 | 5 | 0.2 | 1.2 | | 1 | 2.2 |
| | 50 | 2 | 0.5 | 0.5 | 0.5 | 0.725 | 1 | 1 | | 2 | 6 | 0.1 | 1.5 | | | 1.5 |
| | 51 | 4 | | | | 0 | | | | | 0 | 0.0 | | | | 0 |
| | 52 | 1 | | | | 0 | | | | | 0 | 0.0 | | | | 0 |
| | 53 | 2 | | | | 0 | | | | | 0 | 0.0 | | | | 0 |
| | 54 | 3 | 0.1 | | | 0.052 | | | | | 0 | 0.1 | | | | 0 |
| | 55 | 2 | | 0.1 | | 0.045 | | | | | 0 | 0.0 | | | | 0 |
| | 56 | 4 | | | 0.2 | 0.096 | | | | | 0 | 0.1 | | | | 0 |
| | 57 | 1 | 10 | | | 5.2 | | | | | 0 | 5.2 | | | | 0 |
| | 58 | 3 | | 6 | | 2.7 | | | | | 0 | 2.7 | | | | 0 |
| | 59 | 1 | 2 | 2 | 2 | 2.9 | | | | | 0 | 2.9 | | | | 0 |
| | 60 | 4 | | | | 0 | 15 | | | | 15 | 0.0 | | | | 0 |
| | 61 | 4 | 0 | 0 | 0 | 0 | | 15 | 5 | | 25 | 0.0 | | | | 0 |
| | 62 | 5 | | | | 0 | | 7 | | 5 | 17 | 0.0 | | | | 0 |
| | 63 | 3 | | | | 0 | | | | | 0 | 0.0 | 2 | 2 | | 4 |
| | 64 | 2 | | | | 0 | | | | | 0 | 0.0 | 3 | 1 | 2 | 6 |
| | 65 | 1 | | | | 0 | | | | | 0 | 0.0 | 4 | 1 | 1 | 6 |
| | 66 | 5 | 5 | 2 | 1 | 3.98 | | | | | 0 | 4.0 | 2 | 3 | 1 | 6 |
| | 67 | 2 | 4 | 1 | 4 | 4.45 | | | | | 0 | 4.5 | 4 | 2 | 1 | 7 |

(continued)

| | No. | Wire structure | Content of alkali metals and alkaline-earth metals in flux (mass%) | | | | | | | | | | Other oxides (mass%) | | | |
|---|---|---|---|---|---|---|---|---|---|---|---|---|---|---|---|---|
| | | | Fluorides | | | | Elemental metals and oxides | | | | | | $TiO_2$ | $SiO_2$ | $ZrO_2$ | Total |
| | | | $K_2SiF_6$ | NaF | $CaF_2$ | A (F equivalent) | Mg | Ca | MgO | CaO | B+2C | A/(1+0.7*(B+2C)) | | | | |
| | 68 | 3 | | 7 | | 3.15 | | | | | 0 | 3.2 | 1 | 4 | 1 | 6 |
| | 69 | 1 | 3 | 2 | 1 | 2.94 | 7 | 3 | | | 10 | 0.4 | | | | 0 |
| | 70 | 4 | 1 | 4 | 1 | 2.8 | 1 | 1 | 1 | 1.5 | 7 | 0.5 | | | | 0 |
| | 71 | 5 | | 2 | 4 | 2.82 | 1 | 3 | 1 | 2 | 10 | 0.4 | | | | 0 |
| | 72 | 1 | | | | 0 | 5 | 3 | 3 | 1 | 16 | 0.0 | 2 | 2 | 2 | 6 |
| | 73 | 2 | | | | 0 | 4 | 4 | 1 | 2 | 14 | 0.0 | 3 | 3 | | 6 |
| | 74 | 5 | | | | 0 | 3 | 1 | 5 | 2 | 18 | 0.0 | 1 | 3 | 2 | 6 |

<Welding conditions>

In the welding test, SM490A was used as a test material, and build-up welding was performed thereon (one layer/five passes), under the welding conditions in which the welding current was 250 A and the welding speed was 30 cm/min. Assuming automatic welding, continuous welding was performed without removing slag between passes.

<Evaluation method>

First, X-ray inspection was performed on the samples after welding, and the presence or absence of slag inclusion and incomplete fusion was confirmed. As a result, samples in which slag inclusion or incomplete fusion occurred were all evaluated as failed.

Next, by subjecting the cross section of the weld area to macro observation, the penetration shape was observed, and the base metal dilution ratio was measured. Fig. 1 is a cross-sectional view illustrating a method for measuring a base metal dilution ratio. The base metal dilution ratio was determined by a method in which, regarding a weld metal 2 shown in Fig. 1, the area a of a portion 2a located above the surface of a base metal 1 and the area b of a portion 2b located below were obtained, and the base metal dilution ratio was calculated in accordance with the formula 5 below. As a result, samples in which the base metal dilution ratio was 25% or less were evaluated as passed.

[Formula 5]

$$\text{Base metal dilution ratio } (\%) = b/(a + b) \quad \cdots \quad (5)$$

The amount of spatter generated was measured by collecting spatter scattered over the surroundings and spatter attached to the shielding gas nozzle. Regarding hardfacing welding (wire Nos. 1 and 2) in which the amount of spatter generated is larger than that of ordinary carbon steel welding, samples in which the amount of spatter collected was 1.5 g/min or less were evaluated as "passed", and samples in which the amount of spatter collected was 1.0 g/min or less were evaluated as "very good". Furthermore, regarding corrosion-resistant build-up welding using austenitic stainless steel wires (wire Nos. 3 and 4) and Ni-based alloy wires (wire No. 5), samples in which the amount of spatter collected was 1.0 g/min or less were evaluated as "passed", and samples in which the amount of spatter collected was 0.5 g/min or less were evaluated as "very good".

The results are summarized and shown in Tables 6 and 7. Note that the shielding gas composition is also shown in Tables 6 and 7. The absence of occurrence of slag inclusion is indicated by "O", and the presence of occurrence of slag inclusion is indicated by "x". The absence of occurrence of incomplete fusion is indicated by "O", and the presence of occurrence of incomplete fusion is indicated by "x". Regarding the amount of spatter generated, "passed" and "very good" are indicated by "○" and ⊙", respectively. Furthermore, the amount of spatter collected being more than 1.5 g/min (failed) is indicated by "x".

[Table 6]

|  | No. | Shielding gas | Evaluation results | | | |
|---|---|---|---|---|---|---|
|  |  |  | Base metal dilution | Slag inclusion | Incomplete fusion | Spatter |
|  | 1 | Ar+3%$O_2$ | 21 | ○ | ○ | ⊙ |
|  | 2 | Ar+3%$O_2$ | 24 | ○ | ○ | ⊙ |
|  | 3 | Ar+3%$O_2$ | 19 | ○ | ○ | ⊙ |
|  | 4 | 100%Ar | 20 | ○ | ○ | ⊙ |
|  | 5 | 100%Ar | 19 | ○ | ○ | ⊙ |
|  | 6 | 100%Ar | 20 | ○ | ○ | ⊙ |
|  | 7 | 100%Ar | 21 | ○ | ○ | ⊙ |
|  | 8 | Ar+4%$CO_2$ | 23 | ○ | ○ | ⊙ |
|  | 9 | Ar+4%$CO_2$ | 22 | ○ | ○ | ⊙ |
|  | 10 | Ar+4%$CO_2$ | 23 | ○ | ○ | ⊙ |
|  | 11 | Ar+4%$CO_2$ | 22 | ○ | ○ | ⊙ |

(continued)

| | No. | Shielding gas | Evaluation results | | | |
|---|---|---|---|---|---|---|
| | | | Base metal dilution | Slag inclusion | Incomplete fusion | Spatter |
| Example | 12 | Ar+4%$CO_2$ | 21 | ○ | ○ | ⊙ |
| | 13 | Ar+3%$O_2$ | 24 | ○ | ○ | ⊙ |
| | 14 | Ar+3%$O_2$ | 23 | ○ | ○ | ⊙ |
| | 15 | Ar+3%$O_2$ | 24 | ○ | ○ | ⊙ |
| | 16 | 100%Ar | 23 | ○ | ○ | ⊙ |
| | 17 | 100%Ar | 24 | ○ | ○ | ⊙ |
| | 18 | 100%Ar | 23 | ○ | ○ | ⊙ |
| | 19 | 100%Ar | 22 | ○ | ○ | ⊙ |
| | 20 | 100%Ar | 23 | ○ | ○ | ⊙ |
| | 21 | Ar+4%$CO_2$ | 23 | ○ | ○ | ⊙ |
| | 22 | Ar+4%$CO_2$ | 24 | ○ | ○ | ⊙ |
| | 23 | Ar+4%$CO_2$ | 23 | ○ | ○ | ⊙ |
| | 24 | Ar+4%$CO_2$ | 24 | ○ | ○ | ⊙ |
| | 25 | Ar+4%$CO_2$ | 23 | ○ | ○ | ⊙ |
| | 26 | Ar+3%$O_2$ | 23 | ○ | ○ | ⊙ |
| | 27 | Ar+3%$O_2$ | 22 | ○ | ○ | ⊙ |
| | 28 | Ar+3%$O_2$ | 24 | ○ | ○ | ⊙ |
| | 29 | 100%Ar | 23 | ○ | ○ | ⊙ |
| | 30 | 100%Ar | 22 | ○ | ○ | ⊙ |
| | 31 | 100%Ar | 21 | ○ | ○ | ⊙ |
| | 32 | 100%Ar | 23 | ○ | ○ | ⊙ |
| | 33 | 100%Ar | 24 | ○ | ○ | ⊙ |
| | 34 | Ar+3%$O_2$ | 22 | ○ | ○ | ⊙ |
| | 35 | Ar+3%$O_2$ | 19 | ○ | ○ | ⊙ |
| | 36 | Ar+3%$O_2$ | 21 | ○ | ○ | ⊙ |
| | 37 | 100%Ar | 20 | ○ | ○ | ⊙ |
| | 38 | 100%Ar | 22 | ○ | ○ | ⊙ |
| | 39 | 100%Ar | 21 | ○ | ○ | ⊙ |
| | 40 | 100%Ar | 19 | ○ | ○ | ⊙ |
| | 41 | 100%Ar | 20 | ○ | ○ | ⊙ |
| | 42 | Ar+4%$O_2$ | 22 | ○ | ○ | ⊙ |
| | 43 | Ar+4%$O_2$ | 21 | ○ | ○ | ⊙ |
| | 44 | Ar+4%$O_2$ | 20 | ○ | ○ | ⊙ |

[Table 7]

| | No. | Shielding gas | Evaluation results | | | |
|---|---|---|---|---|---|---|
| | | | Base metal dilution | Slag inclusion | Incomplete fusion | Spatter |
| Comparative Example | 45 | Ar+3%$CO_2$ | 20 | ○ | × | × |
| | 46 | Ar+4%$O_2$ | 19 | ○ | × | × |
| | 47 | Ar+4%$O_2$ | 20 | ○ | × | × |
| | 48 | Ar+2%$O_2$ | 29 | ○ | ○ | ○ |
| | 49 | Ar+2%$CO_2$ | 30 | ○ | ○ | ○ |
| | 50 | 100%Ar | 28 | ○ | ○ | ○ |
| | 51 | Ar+3%$O_2$ | 30 | ○ | ○ | ○ |
| | 52 | Ar+3%$O_2$ | 29 | ○ | ○ | ○ |
| | 53 | Ar+3%$O_2$ | 30 | ○ | ○ | ○ |
| | 54 | 100%Ar | 27 | ○ | ○ | ○ |
| | 55 | 100%Ar | 28 | ○ | ○ | ○ |
| | 56 | 100%Ar | 27 | ○ | ○ | ○ |
| | 57 | Ar+4%$CO_2$ | 23 | ○ | × | × |
| | 58 | Ar+4%$CO_2$ | 21 | ○ | × | × |
| | 59 | Ar+4%$CO_2$ | 24 | ○ | × | × |
| | 60 | Ar+3%$O_2$ | 27 | ○ | ○ | ○ |
| | 61 | 100%Ar | 26 | ○ | ○ | ○ |
| | 62 | 100%Ar | 27 | ○ | ○ | ○ |
| | 63 | 100%Ar | 21 | × | ○ | ○ |
| | 64 | 100%Ar | 23 | × | ○ | ○ |
| | 65 | 100%Ar | 23 | × | ○ | ○ |
| | 66 | Ar+3%$O_2$ | 23 | × | × | × |
| | 67 | Ar+3%$O_2$ | 24 | × | × | × |
| | 68 | Ar+3%$O_2$ | 23 | × | × | × |
| | 69 | 100%Ar | 21 | ○ | ○ | × |
| | 70 | 100%Ar | 22 | ○ | ○ | × |
| | 71 | Ar+4%$CO_2$ | 24 | ○ | ○ | × |
| | 72 | Ar+4%$CO_2$ | 29 | × | ○ | ○ |
| | 73 | Ar+4%$CO_2$ | 28 | × | ○ | ○ |
| | 74 | Ar+4%$CO_2$ | 28 | × | ○ | ○ |

In Nos. 45 to 74 shown in Table 7 above, since [A/{1 + 0.7 × (B + 2C)}] is outside the range of the present invention, any of the base metal dilution ratio, occurrence of slag inclusion or incomplete fusion, and the amount of spatter generated is failed. In contrast, as shown in Table 6 above, in the wires Nos. 1 to 44, which are examples of the present invention, the base metal dilution ratio is low, slag inclusion or incomplete fusion does not occur, and the amount of spatter generated is small.

Next, the relationship between the shielding gas and the wire composition was examined. Specifically, using the flux-cored wires shown in Table 8 below, build-up welding was performed with the composition of the shielding gas being varied, and evaluation was made on the base metal dilution ratio, slag inclusion, incomplete welding, and the amount of spatter. The welding conditions and the evaluation method were the same as those of Example 1 described above. The results thereof are shown in Table 9 below.

[Table 8]

| No. | Wire structure | Content of alkali metals and alkaline-earth metals in flux (mass%) | | | | | | | | | | Other oxides (mass%) | | | |
| --- | --- | --- | --- | --- | --- | --- | --- | --- | --- | --- | --- | --- | --- | --- | --- |
| | | Fluorides | | | | Elemental metals and oxides | | | | | | $TiO_2$ | $SiO_2$ | $ZrO_2$ | Total |
| | | $K_2SiF_6$ | NaF | $CaF_2$ | A (F equivalent) | Mg | Ca | MgO | CaO | B+2C | A/(1+0.7*(B+2C)) | | | | |
| 75 | 2 | 2 | | | 1.04 | | | | | 0 | 1.0 | 1 | | 1 | 2 |
| 76 | 1 | | 2 | | 0.9 | | | | | 0 | 0.9 | | | | 0 |
| 77 | 4 | 1.5 | | 1.5 | 1.5 | 2 | | 2 | | 6 | 0.3 | | | | 0 |
| 78 | 5 | | 5 | | 2.25 | | 1 | | 1 | 3 | 0.7 | | 1 | 1 | 2 |
| 79 | 3 | | | | 0 | | | | | 0 | 0.0 | | | | 0 |
| 80 | 2 | | 2 | | 0.9 | | 2 | | 1 | 4 | 0.2 | | 0.5 | 1 | 1.5 |
| 81 | 1 | 1 | | | 0.52 | | | | | 0 | 0.5 | 0.5 | | | 0.5 |
| 82 | 2 | | 3 | | 1.35 | | 1 | | 2 | 5 | 0.3 | | | 0.5 | 0.5 |
| 83 | 5 | 1 | 1 | | 0.97 | | | | | 0 | 1.0 | | | 0.5 | 0.5 |

[Table 9]

| No. | Shielding gas | Evaluation results | | | |
|---|---|---|---|---|---|
| | | Base metal dilution | Slag inclusion | Incomplete fusion | Spatter |
| 75 | $Ar+20\%CO_2$ | 29 | ○ | ○ | ○ |
| 76 | $Ar+10\%CO_2$ | 27 | ○ | ○ | ○ |
| 77 | $Ar+10\%O_2$ | 28 | ○ | ○ | ○ |
| 78 | $Ar+3\%O_2+3\%CO_2$ | 26 | ○ | ○ | ○ |
| 79 | $A+6\%CO_2$ | 26 | ○ | ○ | ○ |
| 80 | $Ar+6\%O_2$ | 26 | ○ | ○ | ○ |
| 81 | $100\%CO_2$ | 29 | ○ | ○ | × |
| 82 | $Ar+30\%CO_2$ | 28 | ○ | ○ | × |
| 83 | $100\%CO_2$ | 29 | ○ | ○ | × |

As shown in Table 9 above, in the case where a shielding gas having an Ar gas concentration of less than 95% by volume is used, in comparison with the wires Nos. 1 to 44 shown in Table 6, the amount of spatter tends to increase. From the results, it has been confirmed that the flux-cored wire of the present invention is particularly effective for build-up welding using a shielding gas having an Ar gas concentration of 95% by volume or more.

Reference Signs List

1 base metal

2, 2a, 2b weld metal

**Claims**

1.  A flux-cored wire for build-up welding comprising a sheath filled with a flux, wherein the filling ratio of the flux is 10.0% to 35.0% by mass; and the following formula (I) is satisfied:

$$0.3 \le [A/\{1 + 0.7 \times (B + 2C)\}] \le 2.0 \quad \cdots \quad (I)$$

where A (mass%) represents the total content (F equivalent) of alkali metal fluorides and alkaline-earth metal fluorides, B (mass%) represents the total content of elemental alkali metals and elemental alkaline-earth metals, and C (mass%) represents the total content of alkali metal oxides and alkaline-earth metal oxides, relative to the total mass of the flux.

2.  The flux-cored wire for build-up welding according to Claim 1, wherein, in the flux, the total content A, in terms of F equivalent, of alkali metal fluorides and alkaline-earth metal fluorides is 0.2% to 3.0% by mass.

3.  The flux-cored wire for build-up welding according to Claim 1 or 2, wherein, in the flux, the relationship between the total content B (mass%) of elemental alkali metals and elemental alkaline-earth metals and the total content C (mass%) of alkali metal oxides and alkaline-earth metal oxides satisfies the following formula (II):

$$(B + 2C) \le 6 \quad \cdots \quad (II)$$

4.  The flux-cored wire for build-up welding according to Claim 1 or 2, wherein, in the flux, the total content of $TiO_2$,

SiO$_2$, and ZrO$_2$ is limited to 3% by mass or less.

5. The flux-cored wire for build-up welding according to Claim 1 or 2, wherein the sheath is made of austenitic stainless steel, and the flux-cored wire is used for arc welding that uses a shielding gas having an Ar gas concentration of 95% by volume or more.

6. The flux-cored wire for build-up welding according to Claim 5, wherein the wire has a composition including 0.3% to 1% by mass of Si, 0.5% to 2.5% by mass of Mn, 18% to 25% by mass of Cr, 9% to 14% by mass of Ni, 0.04% by mass or less of C, and the balance being Fe and incidental impurities, relative to the total mass of the wire.

7. The flux-cored wire for build-up welding according to Claim 6, wherein the composition further includes 4% by mass or less of Mo and/or 1% by mass or less of Nb, relative to the total mass of the wire.

8. The flux-cored wire for build-up welding according to Claim 1 or 2, wherein the sheath is made of a Ni-based alloy, and the flux-cored wire is used for arc welding that uses a shielding gas having an Ar gas concentration of 95% by volume or more.

9. The flux-cored wire for build-up welding according to Claim 8, wherein the wire has a composition including 0.1% to 1% by mass of Si, 0.3% to 10% by mass of Mn, 13% to 24% by mass of Cr, and the balance being Ni and incidental impurities, relative to the total mass of the wire.

10. The flux-cored wire according to Claim 9, wherein the composition further includes at least one element selected from the group consisting of 0.1% by mass of less of C, 17% by mass or less of Mo, 5% by mass or less of Nb, 0.75% by mass or less of Ti, 5% by mass or less of W, 0.3% by mass or less of V, and 20% by mass or less of Fe, relative to the total mass of the wire.

11. The flux-cored wire for build-up welding according to Claim 1 or 2, wherein the flux-cored wire is used for hardfacing welding that uses a shielding gas having an Ar gas concentration of 95% by volume or more.

12. The flux-cored wire for build-up welding according to Claim 11, wherein the wire has a composition including 0.05% to 1.5% by mass of C, 0.3% to 3.0% by mass of Si, 0.3% to 3.0% by mass of Mn, 0.3% to 10% by mass of Cr, and the balance being Fe and incidental impurities, relative to the total mass of the wire.

13. The flux-cored wire according to Claim 12, wherein the composition further includes at least one element selected from the group consisting of 9% by mass or less of Mo, 4% by mass or less of W, and 2% by mass or less of V, relative to the total mass of the wire.

# FIG. 1

## INTERNATIONAL SEARCH REPORT

| International application No. |
| --- |
| PCT/JP2014/063846 |

**A. CLASSIFICATION OF SUBJECT MATTER**
*B23K35/368*(2006.01)i, *B23K35/30*(2006.01)i, *C22C19/05*(2006.01)i

According to International Patent Classification (IPC) or to both national classification and IPC

**B. FIELDS SEARCHED**

Minimum documentation searched (classification system followed by classification symbols)
B23K35/368, B23K35/30, C22C19/05

Documentation searched other than minimum documentation to the extent that such documents are included in the fields searched
Jitsuyo Shinan Koho          1922–1996    Jitsuyo Shinan Toroku Koho    1996–2014
Kokai Jitsuyo Shinan Koho     1971–2014    Toroku Jitsuyo Shinan Koho    1994–2014

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X<br>Y<br>A | JP 58-23596 A  (Nippon Steel Corp.),<br>12 February 1983 (12.02.1983),<br>claims; tables 3, 4<br>(Family: none) | 1,5,11<br>8<br>2-4,6,7,9,<br>10,12,13 |
| Y | JP 2010-234395 A  (Kobe Steel, Ltd.),<br>21 October 2010 (21.10.2010),<br>claims; paragraphs [0033] to [0048]<br>(particularly, table 4)<br>(Family: none) | 8 |
| A | JP 2012-115889 A  (Kobe Steel, Ltd.),<br>21 June 2012 (21.06.2012),<br>claims; paragraphs [0044] to [0065]<br>(particularly, tables 2-1 to 2-4)<br>& US 2012/0276384 A1    & WO 2012/073646 A1<br>& CN 102639285 A         & KR 10-2013-0016331 A | 1-13 |

☒ Further documents are listed in the continuation of Box C.          ☐ See patent family annex.

* Special categories of cited documents:
"A"    document defining the general state of the art which is not considered    to be of particular relevance
"E"    earlier application or patent but published on or after the international filing date
"L"    document which may throw doubts on priority claim(s) or which is cited to establish the publication date of another citation or other special reason (as specified)
"O"    document referring to an oral disclosure, use, exhibition or other means
"P"    document published prior to the international filing date but later than the priority date claimed

"T"    later document published after the international filing date or priority date and not in conflict with the application but cited to understand the principle or theory underlying the invention
"X"    document of particular relevance; the claimed invention cannot be considered novel or cannot be considered to involve an inventive step when the document is taken alone
"Y"    document of particular relevance; the claimed invention cannot be considered to involve an inventive step when the document is combined with one or more other such documents, such combination being obvious to a person skilled in the art
"&"    document member of the same patent family

| Date of the actual completion of the international search<br>    29 July, 2014 (29.07.14) | Date of mailing of the international search report<br>    12 August, 2014 (12.08.14) |
| --- | --- |
| Name and mailing address of the ISA/<br>    Japanese Patent Office | Authorized officer |
| Facsimile No. | Telephone No. |

Form PCT/ISA/210 (second sheet) (July 2009)

**EP 3 020 504 A1**

**INTERNATIONAL SEARCH REPORT**

<table>
<tr><td>International application No.</td></tr>
<tr><td>PCT/JP2014/063846</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 58-16793 A (Kobe Steel, Ltd.), 31 January 1983 (31.01.1983), claims; page 4, lower left column, lines 4 to 10; table 1 (symbols A, F, G, I) (Family: none) | 1-13 |
| A | JP 3-13296 A (Kobe Steel, Ltd.), 22 January 1991 (22.01.1991), claims; table 1 (no.6) (Family: none) | 1-13 |
| A | JP 6-114591 A (Kobe Steel, Ltd.), 26 April 1994 (26.04.1994), claims; table 1 (Family: none) | 1-13 |
| A | JP 2007-118077 A (Nippon Steel Corp.), 17 May 2007 (17.05.2007), claims; table 1 & US 2009/0158889 A1 & EP 1940582 A & WO 2007/037447 A1 & CA 2624140 A & CN 101277781 A & RU 2008116610 A & KR 10-1012199 B & TWB 00I310713 & BRA PI0616709 & MY 146745 A & KR 10-2008-0053395 A | 6,7 |
| A | JP 2005-279768 A (Independent Administrative Institution National Institute for Materials Science), 13 October 2005 (13.10.2005), claims; table 4 (Family: none) | 6,7 |
| A | JP 2012-55899 A (Kobe Steel, Ltd.), 22 March 2012 (22.03.2012), claims; table 1 & US 2012/0055903 A1 & KR 10-2012-0024360 A | 9,10 |
| A | JP 5-337690 A (Kobe Steel, Ltd.), 21 December 1993 (21.12.1993), claims; table 1 (Family: none) | 12,13 |

Form PCT/ISA/210 (continuation of second sheet) (July 2009)

20

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2010253516 A

- JP 2012055899 A